(19) Europäisches Patentamt
European Patent Office
Office européen des brevets

(11) **EP 2 577 426 B1**

(12) **EUROPEAN PATENT SPECIFICATION**

(45) Date of publication and mention
of the grant of the patent:
**11.12.2019 Bulletin 2019/50**

(21) Application number: **11789411.3**

(22) Date of filing: **25.05.2011**

(51) Int Cl.:
*G06F 3/01* *(2006.01)*     *G06F 3/023* *(2006.01)*
*G06F 3/033* *(2013.01)*     *G06F 3/0482* *(2013.01)*
*G06K 9/00* *(2006.01)*

(86) International application number:
**PCT/JP2011/002913**

(87) International publication number:
**WO 2011/151997 (08.12.2011 Gazette 2011/49)**

(54) **INFORMATION PROCESSING APPARATUS AND METHOD AND PROGRAM**

VORRICHTUNG UND VERFAHREN ZUR INFORMATIONSVERARBEITUNG SOWIE PROGRAMM

APPAREIL, PROCÉDÉ ET PROGRAMME DE TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2010 JP 2010125967**

(43) Date of publication of application:
**10.04.2013 Bulletin 2013/15**

(73) Proprietor: **Sony Corporation
Tokyo 108-0075 (JP)**

(72) Inventor: **WATANABE, Sayaka
Tokyo 108-0075 (JP)**

(74) Representative: **D Young & Co LLP
120 Holborn
London EC1N 2DY (GB)**

(56) References cited:
WO-A1-2010/006087     JP-A- 2000 029 621
JP-A- 2008 530 661     US-A1- 2002 021 287
US-A1- 2008 141 181     US-A1- 2009 027 337

## Description

## Technical Field

The disclosed exemplary embodiments relate to an information processing apparatus and method and a program. In particular, the disclosed exemplary embodiments relate to an information processing apparatus and method and a program that can achieve a robust user interface employing a gesture.

## Background Art

In recent years, in the area of information selection user interface (UI), research on a UI employing a noncontact gesture using part of a body, for example, a hand or finger, instead of information selection through an information input apparatus, such as a remote controller or keyboard, has become increasingly active.

Examples of a proposed technique of selecting information employing a gesture include a pointing operation of detecting movement of a portion of a body, such as a hand or fingertip, and linking the amount of the movement with an on-screen cursor position and a technique of direct association between the shape of a hand or pose and information. At this time, many information selection operations are achieved by combination of information selection using a pointing operation and a determination operation using information on, for example, the shape of a hand or pose.

More specially, one of the pointing operations most frequently used in information selection operation is the one recognizing the position of a hand. This is intuitive and significantly readily understandable because information is selected by movement of a hand. (See, for example, Horo, at al., "Realtime Pointing Gesture Recognition Using Volume Intersection," The Japan Society of Mechanical Engineers, Robotics and Mechatronics Conference, 2006, Non Patent Literature 1.)

However, with the technique of recognizing the position of a hand, depending on the position of the hand of a human body being a target of estimation, determination whether it is a left or right hand may be difficult. For example, for inexpensive hand detection using a still image, the detection recognizing a hand by matching between detection of a skin color region and the shape of the hand, overlapping of right and left hands may be indistinguishable from each other. Thus, a technique of distinguishing by recognizing a depth using a range sensor, such as an infrared sensor, is proposed. (See, for example, Akahori, et al., "Interface of Home Appliances Terminal on User's Gesture," ITX2001, 2001, Non Patent Literature 2.) In addition, a recognition technique having constraints, for example, that it is disabled when right and left hands are used at the same time, that it is disabled when right and left hands are crossed, and that movement is recognizable only when a hand exists in a predetermined region is also proposed (see Non Patent Literature 3).

## Citation List

JP2000-0029621 discloses a system comprising a video camera, a head-mounted display and a computer which are arranged to provide a virtual keyboard and mouse. In one embodiment, a video camera and a head-mounted display are integrated and connected to a computer main body. Plural LEDs mounted to the fingers of a user are connected to a computer and driven by appropriate code signals, the images of the LEDs flickering in mutually different patterns are picked up by the video camera and the spatial positions of the respective LEDs are fetched to the computer. A key of a virtual keyboard and/or a button of a virtual mouse displayed on a display screen are accessed by a luminescent point corresponding to the spatial positions of a respective LED and a desired input operation is performed.

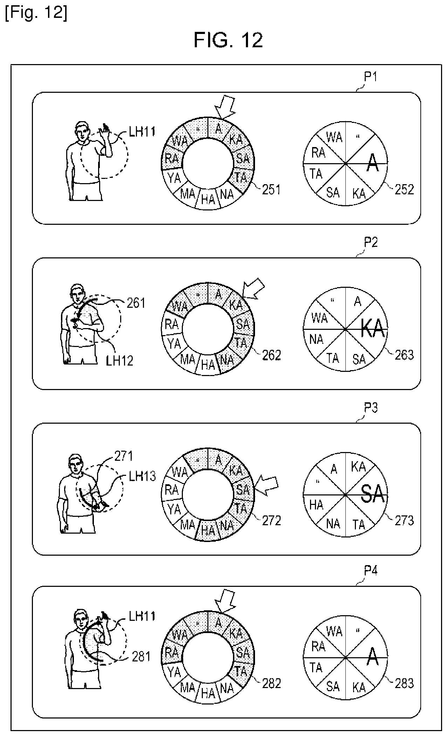

WO 2010/006087 discloses a system comprising microphones, cameras and a computer which is programmed to allow various software objects in a system to respond to speech and hand gesture and other inputs. In one embodiment, menu areas are displayed in response to speech and gesture input as indicated in Figure 12. The user may select an object and perform a spreading or stretching motion invoking a menu area. The user may then select areas of the menu to perform some operation or selection.

US2008/0141181 discloses a system comprising a camera and a computer which is arranged to detect hand shapes.

## Non Patent Literature

> NPL 1: Horo, Okada, Inamura, and Inaba, "Realtime Pointing Gesture Recognition Using Volume Intersection," The Japan Society of Mechanical Engineers, Robotics and Mechatronics Conference, 2006
> NPL 2: Akahori and Imai, "Interface of Home Appliances Terminal on User's Gesture," ITX2001, 2001
> NPL 3: Nakamura, Takahashi, and Tanaka, "Hands-Popie: A Japanese Input System Which Utilizes the Movement of Both Hands," WISS, 2006

## Summary of Invention

## Technical Problem

However, for the technique of Non Patent Literature 1, for example, if a user selects the input symbol 1 by a pointing operation from a large area of options, such as a keyboard displayed on a screen, because it is necessary to largely move a hand or finger while keeping the hand at a raised state, the user tends to be easily tired. Even when a small area of options is used, if the screen of an apparatus for displaying selection information is large, because the amount of movement of a hand or finger is also large, the user tends to be easily tired as well.

In the case of Non Patent Literatures 2 and 3, it is difficult to distinguish between right and left hands when the hands overlap each other. Even when the depth is recognizable using a range sensor, such as an infrared sensor, if the hands at substantially the same distance from the sensor are crossed, there is a high probability that the hands are not distinguishable.

A technique illustrated in Non Patent Literature 3 is proposed. Even with this, because there are constraints, for example, that right and left hands are not allowed to be used at the same time, that right and left hands are not allowed to be crossed, and that movement is recognizable only when a hand exists in a predetermined region, a pointing operation is restricted.

And, it is said that the human spatial perception feature leads to differences between an actual space and a perceived space at a remote site, and this is a problem in pointing on a large screen (see, for example, Shintani, at al., "Evaluation of a Pointing Interface for a Large Screen with Image Features," Human Interface Symposium, 2009).

The disclosed exemplary embodiments enable a very robust user interface even using an information selection operation employing a simple gesture.

**Solution to Problem**

Consistent with an embodiment of the invention, an apparatus is provided according to independent claim 1.

Consistent with an additional embodiment of the invention, a computer-implemented method is provided according to independent claim 11.

Consistent with a further embodiment of the invention, a non-transitory, computer-readable storage medium is provided according to independent claim 12.

The dependent claims define further advantageous embodiments. These and other embodiments, which do not necessarily fall within the scope of the claims, are described hereinafter as exemplary embodiments.

**Advantageous Effect of Invention**

According to the disclosed exemplary embodiments, a robust user interface employing a gesture can be achieved.

**Brief Description of Drawings**

[Fig. 1] Fig. 1 is a block diagram that illustrates a configuration of an information input apparatus, according to an exemplary embodiment.

[Fig. 2] Fig. 2 illustrates a configuration example of a human body pose estimation unit.

[Fig. 3] Fig. 3 is a flowchart for describing an information input process.

[Fig. 4] Fig. 4 is a flowchart for describing a human body pose estimation process.

[Fig. 5] Fig. 5 is a flowchart for describing a pose recognition process.

[Fig. 6] Fig. 6 is an illustration for describing the pose recognition process.

[Fig. 7] Fig. 7 is an illustration for describing the pose recognition process.

[Fig. 8] Fig. 8 is an illustration for describing the pose recognition process.

[Fig. 9] Fig. 9 is a flowchart for describing a gesture recognition process.

[Fig. 10] Fig. 10 is a flowchart for describing an information selection process.

[Fig. 11] Fig. 11 is an illustration for describing the information selection process.

[Fig. 12] Fig. 12 is an illustration for describing the information selection process.

[Fig. 13] Fig. 13 is an illustration for describing the information selection process.

[Fig. 14] Fig. 14 is an illustration for describing the information selection process.

[Fig. 15] Fig. 15 is an illustration for describing the information selection process.

[Fig. 16] Fig. 16 is an illustration for describing the information selection process.

[Fig. 17] Fig. 17 illustrates a configuration example of a general-purpose personal computer.

**Description of Embodiments**

**Configuration Example of Information Input Apparatus**

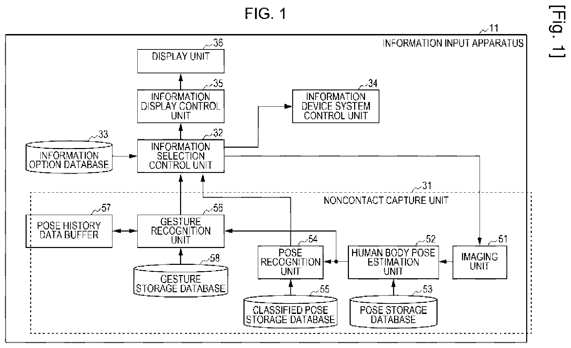

Fig. 1 illustrates a configuration example of an embodiment of hardware of an information input apparatus, according to an exemplary embodiment. An information input apparatus 11 in Fig. 1 recognizes an input operation in response to an action (gesture) of the human body of a user and displays a corresponding processing result.

The information input apparatus 11 includes a noncontact capture unit 31, an information selection control unit (or selection unit) 32, an information option database 33, an information device system control unit 34, an information display control unit 35, and a display unit 36.

The noncontact capture unit 31 obtains an image that contains a human body of a user, generates a pose command corresponding to a pose of the human body of the user in the obtained image or a gesture command corresponding to a gesture being chronological poses, and supplies it to the information selection control unit 32. That is, the noncontact capture unit 31 recognizes a pose or a gesture in a noncontact state with respect to a human body of a user, generates a corresponding pose command or gesture command, and supplies it to the information selection control unit 32.

More specifically, the noncontact capture unit 31 includes an imaging unit 51, a human body pose estimation unit (or receiving unit) 52, a pose storage database 53, a pose recognition unit 54, a classified pose storage database 55, a gesture recognition unit 56, a pose history data buffer 57, and a gesture storage database 58.

The imaging unit 51 includes an imaging element, such as a charge-coupled device (CCD) or complementary metal-oxide semiconductor (CMOS), is controlled by the information selection control unit 32, obtains an image that contains a human body of a user, and supplies the obtained image to the human body pose estimation unit 52.

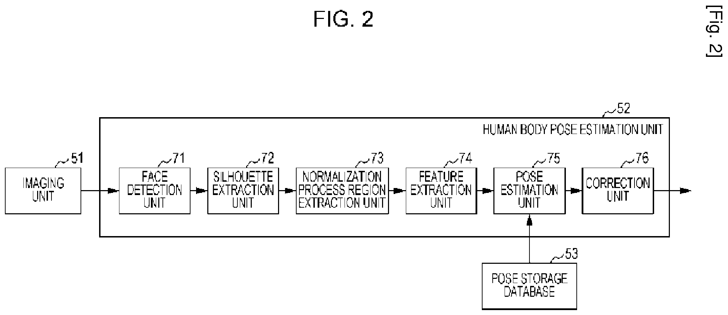

The human body pose estimation unit 52 recognizes a pose of a human body on a frame-by-frame basis on the basis of an image that contains the human body of a user supplied from the imaging unit 51, and supplies pose information associated with the recognized pose to the pose recognition unit 54 and the gesture recognition unit 56. More specifically, the human body pose estimation unit 52 extracts a plurality of features indicating a pose of a human body from information on an image obtained by the imaging unit 51. Then, the human body pose estimation unit 52 estimates information on coordinates and an angle of a joint of the human body in a three-dimensional space for each pose using the sum of products of elements of a vector of the plurality of extracted features and a vector of coefficients registered in the pose storage database 53 obtained by learning based on a vector of a plurality of features for each pose, and determines pose information having these as a parameter. Note that the details of the human body pose estimation unit 52 are described below with reference to Fig. 2.

The pose recognition unit 54 searches pose commands associated with previously classified poses registered in the classified pose storage database 55 together with pose information, on the basis of pose information having information on the coordinates and an angle of a joint of a human body as a parameter. Then, the pose recognition unit 54 recognizes a pose registered in association with the pose information searched for as the pose of the human body of the user and supplies a pose command associated with that pose registered together with the pose information to the information selection control unit 32.

The gesture recognition unit 56 sequentially accumulates pose information supplied from the human body pose estimation unit 52 on a frame-by-frame basis for a predetermined period of time in the pose history data buffer 57. Then, the gesture recognition unit 56 searches chronological pose information associated with previously classified gestures registered in the gesture storage database 58 for a corresponding gesture. The gesture recognition unit 56 recognizes a gesture associated with the chronological pose information searched for as the gesture made by the human body whose image has been obtained. The gesture recognition unit 56 reads a gesture command registered in association with the recognized gesture from the gesture storage database 58, and supplies it to the information selection control unit 32.

In the information option database 33, information being an option associated with a pose command or gesture command supplied from the noncontact capture unit 31 is registered. The information selection control unit 32 selects information being an option from the information option database 33 on the basis of a pose command or gesture command supplied from the noncontact capture unit 31, and supplies it to the information display control unit 35.

The information device system control unit 34 causes an information device functioning as a system (not illustrated) or a stand-alone information device to perform various kinds of processing on the basis of information being an option supplied from the information selection control unit 32.

The information display control unit 35 causes the display unit 36 including, for example, a liquid crystal display (LCD) to display information corresponding to information selected as an option.

Configuration Example of Human Body Pose Estimation Unit

Next, a detailed configuration example of the human body pose estimation unit 52 is described with reference to Fig. 2.

The human body pose estimation unit 52 includes a face detection unit 71, a silhouette extraction unit 72, a normalization process region extraction unit 73, a feature extraction unit 74, a pose estimation unit 75, and a correction unit 76. The face detection unit 71 detects a face image from an image supplied from the imaging unit 51, identifies a size and position of the detected face image, and supplies them to the silhouette extraction unit 72, together with the image supplied from the imaging unit 51. The silhouette extraction unit 72 extracts a silhouette forming a human body from the obtained image on the basis of the obtained image and information indicating the size and position of the face image supplied from the face detection unit 71, and supplies it to the normalization process region extraction unit 73 together with the information about the face image and the obtained image.

The normalization process region extraction unit 73 extracts a region for use in estimation of pose information for a human body as a normalization process region from an obtained image using the obtained image, information indicating the position and size of a face image, and silhouette information and supplies it to the feature extraction unit 74 together with image information. The feature extraction unit 74 extracts a plurality of features, for example, edges, an edge strength, and an edge direction, from the obtained image, in addition to the position and size of the face image and the silhouette information, and supplies a vector having the plurality of features as elements to the pose estimation unit 75.

The pose estimation unit 75 reads a vector of a plurality of coefficients from the pose storage database 53 on the basis of information on a vector having a plurality of features as elements supplied from the feature extraction unit 74. Note that in the following description, a vector having a plurality of features as elements is referred to as a feature vector. Further, a vector of a plurality of coefficients registered in the pose storage database 53 in association with a feature vector is referred to as a coefficient vector. That is, in the pose storage database 53, a coefficient vector (a set of coefficients) previously determined in association with a feature vector for each pose by learning is stored. The pose estimation unit 75 determines pose information using the sum of products of a read coefficient vector and a feature vector, and supplies it to the correction unit 76. That is, pose information determined here is information indicating the coordinate positions of a plurality of joints set as a human body and an angle of the joints.

The correction unit 76 corrects pose information determined by the pose estimation unit 75 on the basis of constraint determined using the size of an image of a face of a human body, such as the length of an arm or leg, and supplies the corrected pose information to the pose recognition unit 54 and the gesture recognition unit 56.

**About Information Input Process**

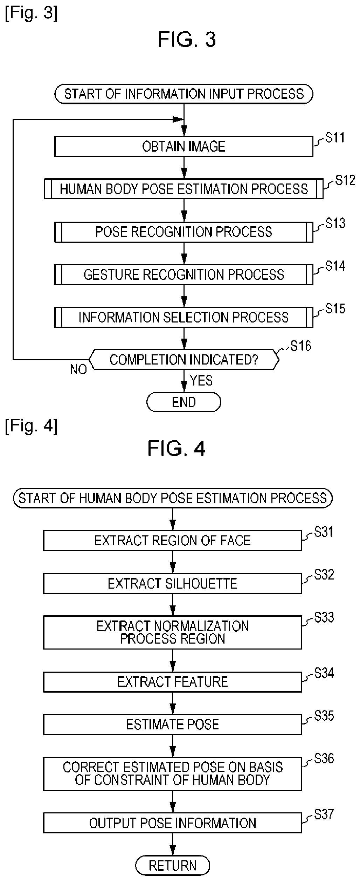

Next, an information input process is described with reference to the flowchart of Fig. 3.
In step S11, the imaging unit 51 of the noncontact capture unit 31 obtains an image of a region that contains a person being a user, and supplies the obtained image to the human body pose estimation unit 52.
In step S12, the human body pose estimation unit 52 performs a human body pose estimation process, estimates a human body pose, and supplies it as pose information to the pose recognition unit 54 and the gesture recognition unit 56.

**Human Body Pose Estimation Process**

Here, a human body pose estimation process is described with reference to the flowchart of Fig. 4.
In step S31, the face detection unit 71 determines information on the position and size of an obtained image of a face of a person being a user on the basis of an obtained image supplied from the imaging unit 51, and supplies the determined information on the face image and the obtained image to the silhouette extraction unit 72. More specifically, the face detection unit 71 determines whether a person being a user is present in an image. When the person is present in the image, the face detection unit 71 detects the position and size of the face image. At this time, when a plurality of face images is present, the face detection unit 71 determines information for identifying the plurality of face images and the position and size of each of the face images. The face detection unit 71 determines the position and size of a face image by, for example, a method employing a black and white rectangular pattern called Haar pattern. For example, a method of detecting a face image using a Haar pattern leverages the fact that the eye and mouse are darker than other regions, and represents a technique of representing lightness of a face in combination of specific patterns called Haar patterns and detecting a face image depending on the arrangement, coordinates, sizes, and number of these patterns.

In step S32, the silhouette extraction unit 72 extracts only a foreground region as a silhouette by measuring a difference from a previously registered background region, and separating the foreground region from the background region in a similar way to detection of a face image, e.g., a so-called background subtraction technique. Then, the silhouette extraction unit 72 supplies the extracted silhouette, information on the face image, and obtained image to the normalization process region extraction unit 73. Note that the silhouette extraction unit 72 may also extract a silhouette by a method other than the background subtraction technique. For example, it may also employ other general algorithms, such as a motion difference technique using a region having predetermined motion or more as a foreground region.

In step S33, the normalization process region extraction unit 73 sets a normalization process region (that is, a process region for pose estimation) using information on the position and size of a face image being a result of face image detection. The normalization process region extraction unit 73 generates a normalization process region composed of only a foreground region part forming a human body from which information on a background region is removed in accordance with the silhouette of a target human body extracted by the silhouette extraction unit 72, and outputs it to the feature extraction unit 74. With this normalization process region, the pose of a human body can be estimated without consideration of the positional relationship between the human body and the imaging unit 51.

In step S34, the feature extraction unit 74 extracts features, such as edges within a normalization process region, edge strength, and edge direction, and forms a feature vector made up of a plurality of features, in addition to the position and size of a face image and silhouette information, to the pose estimation unit 75.

In step S35, the pose estimation unit 75 reads a coefficient vector (that is, a set of coefficients) previously determined by learning and associated with a supplied feature vector and pose from the pose storage database 53. Then, the pose estimation unit 75 determines pose information including the position and angle of each joint in three-dimensional coordinates by the sum of products of elements of the feature vector and the coefficient vector, and supplies it to the correction unit 76.

In step S36, the correction unit 76 corrects pose information including the position and angle of each joint on the basis of constraint, such as the position and size of a face image of a human body and the length of an arm or leg of the human body. In step S37, the correction unit 76 supplies the corrected pose information to the pose recognition unit 54 and the gesture recognition unit 56.

Here, a coefficient vector stored in the pose storage database 53 by learning based on a feature vector is described.

As described above, the pose storage database 53 prepares a plurality of groups of feature vectors obtained from image information for necessary poses and coordinates of a joint in a three-dimensional space that corresponds to the poses, and stores a coefficient vector obtained by learning using these correlations. That is, the pose storage database 53 determines a correlation between a feature vector of the whole of the upper half of the body obtained from an image subjected to a normalization process and coordinates of the position of a joint of the human body in a three-dimensional space, and estimates a pose of the human body enables various poses, for example, crossing of right and left hands to be recognized.

Various algorithms can be used to determine the coefficient vector. Here, multiple regression analysis is described as an example. A relation between (i) a feature vector x epsilon R_m (epsilon: contained as an element) obtained by conversion of image information, and (ii) a pose information vector X epsilon R_d of elements forming pose information including coordinates of the position of a joint of a human body in a three-dimensional space and the angle of the joint may be expressed in a multiple regression equation using the following expression.

Expression 1

$$Y = X\beta + \varepsilon \qquad \cdots (1)$$

Here, m denotes a dimension of a used feature, and d denotes a dimension of a coordinate vector of the position of a joint of a human body in a three-dimensional space. Epsilon is called residual vector and represents a difference between the coordinates of the position of a joint of a human body in a three-dimensional space used in learning and predicted three-dimensional positional coordinates determined by multiple regression analysis. Here, to represent an upper half of a body, positional coordinates (x, y, z) in a three-dimensional space of eight joints in total of a waist, a head, and both shoulders, elbows, and wrists are estimated. A calling side can obtain a predicted value of coordinates of the position of a joint of a human body in a three-dimensional space by multiplying together an obtained feature vector and a partial regression coefficient vector beta_(m*d) obtained by learning. The pose storage database 53 stores elements of a partial regression coefficient vector beta_(m*d) (coefficient set) as a coefficient vector described above.

As a technique of determining a coefficient vector beta using a learning data set described above, multiple regression analysis called ridge regression can be used, for example. Typical multiple regression analysis uses the least squares method to determine a partial regression coefficient vector beta_(m*d), so as to obtain the minimum square of the difference between a predicted value and a true value (for example, coordinates of the position of a joint of a human body in a three-dimensional space and an angle of a joint in learning data) in accordance with an evaluation function expressed using the following expression.

Expression 2

$$\min\{\|Y - X\beta\|^2\} \qquad \cdots (2)$$

For ridge regression, a term containing an optional parameter lambda is added to an evaluation function in the least squares method, and a partial regression coefficient vector beta_(m*d) at which the following expression has the minimum value is determined.

Expression 3

$$\min\{\|Y - X\beta\|^2 + \lambda\|\beta\|^2\} \qquad \cdots (3)$$

Here, lambda is a parameter for controlling "goodness" of fit of a model obtained by a multiple regression equation and learning data. It is known that, in not only multiple regression analysis but also using other learning algorithms, an issue called overfitting should be sufficiently considered. Overfitting is low generalization performance learning that supports learning data, but cannot fit unknown data. A term that contains a parameter lambda appearing ridge regression is a parameter for controlling goodness of fit to learning data, and is effective for controlling overfitting. When a parameter lambda is small, the goodness of fit to learning data is high, but that to unknown data is low. In contrast, when a parameter lambda is large, the goodness of fit to learning data is low, but that to unknown data is high. A parameter lambda is adjusted so as to achieve a pose storage database with higher generalization performance.

Note that the coordinates of the position of a joint in a three-dimensional space can be determined as coordinates calculated when the position of the center of a waist is the origin point. Even when each coordinate position and angle can be determined using the sum of products of elements of a coefficient vector beta determined by multiple regression analysis and a feature vector, an error may occur in the relationship between lengths of parts of a human body, such as an arm and leg, in learning. Therefore, the correction unit 76 corrects pose information under constraint based on the relationship between lengths of parts (e.g., arm and leg).

With the foregoing human body pose estimation process, information on the coordinates of the position of each joint of a human body of a user in a three-dimensional space and its angle is determined as pose information (that is, a pose information vector) and supplied to the pose recognition unit 54 and the gesture recognition unit 56.

Here, the description returns to the flowchart of Fig. 3.

When pose information for a human body is determined in the processing of step S12, the pose recognition unit 54 performs a pose recognition process and recognizes a pose by comparing it with pose information for each pose previously registered in the classified pose storage database 55 on the basis of the pose information in step S13. Then, the pose recognition unit 54 reads a pose command associated with the recognized pose registered in the classified pose storage database 55, and supplies it to the information selection control unit 32.

**Pose Recognition Process**

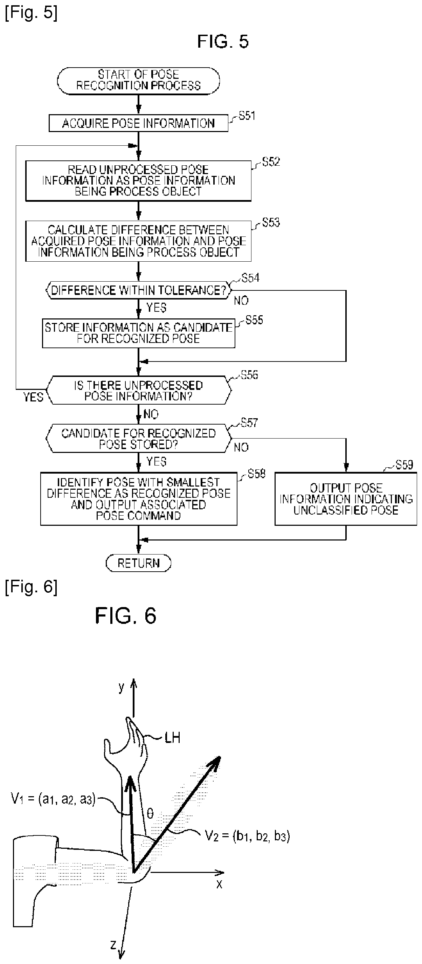

Here, the pose recognition process is described with reference to the flowchart of Fig. 5.

In step S51, the pose recognition unit 54 obtains pose information including information on the coordinates of the position of each joint of a human body of a user in a three-dimensional space and information on its angle supplied from the human body pose estimation unit 52.

In step S52, the pose recognition unit 54 reads unprocessed pose information among pose information registered in the classified pose storage database 55, and sets it at pose information being a process object.

In step S53, the pose recognition unit 54 compares pose information being a process object and pose information supplied from the human body pose estimation unit 52 to determine its difference. More specifically, the pose recognition unit 54 determines the gap in the angle of a part linking two continuous joints on the basis of information on the coordinates of the position of the joints contained in the pose information being the process object and the obtained pose information, and determines it as the difference. For example, when a left forearm linking a left elbow and a left wrist joint is an example of a part, a difference theta is determined as illustrated in Fig. 6. That is, the difference theta illustrated in Fig. 6 is the angle formed between a vector $V_1$ $(a_1, a_2, a_3)$, whose origin point is a superior joint, that is, the left elbow joint and that is directed from the left elbow to the wrist based on previously registered pose information being the process object, and a vector $V_2$ $(b_1, b_2, b_3)$ based on the pose information estimated by the human body pose estimation unit 52. The difference theta can be determined by calculation of the following expression (4).

**Expression 4**

$$\theta = \cos^{-1}\left( \frac{a_1 b_1 + a_2 b_2 + a_3 b_3}{\sqrt{a_1^2 + a_2^2 + a_3^2} \cdot \sqrt{b_1^2 + b_2^2 + b_3^2}} \right) \quad \cdots (4)$$

In this way, the pose recognition unit 54 determines the difference theta in angle for each of all joints obtained from pose information by calculation.

In step S54, the pose recognition unit 54 determines whether all of the determined differences theta fall within tolerance thetath. When it is determined in step S54 that all of the differences theta fall within tolerance thetath, the process proceeds to step S55.

In step S55, the pose recognition unit 54 determines that it is highly likely that pose information supplied from the human body pose estimation unit 52 matches the pose classified as the pose information being the process object, and stores the pose information being the process object and information on the pose classified as that pose information as a candidate.

On the other hand, when it is determined in step S54 that not all of the differences theta is within tolerance thetath, it is determined that the supplied information does not match the pose corresponding to the pose information being the process object, the processing of step S55 is skipped, and the process proceeds to step S56.

In step S56, the pose recognition unit 54 determines whether there is unprocessed pose information in the classified pose storage database 55. When it is determined that there is unprocessed pose information, the process returns to step S52. That is, until it is determined that there is no unprocessed pose information, the processing from step S52 to step S56 is repeated. Then, when it is determined in step S56 that there is no unprocessed pose information, the process proceeds step S57.

In step S57, the pose recognition unit 54 determines whether pose information for the pose corresponding to a candidate is stored. In step S57, for example, when it is stored, the process proceeds to step S58.

In step S58, the pose recognition unit 54 reads a pose command registered in the classified pose storage database 55 together with pose information in association with the pose having the smallest sum of the differences theta among poses being candidates, and supplies it to the information selection control unit 32.

On the other hand, when it is determined in step S57 that pose information corresponding to the pose being a candidate has not been stored, the pose recognition unit 54 supplies a pose command indicating an unclassified pose to the information selection control unit 32 in step S59.

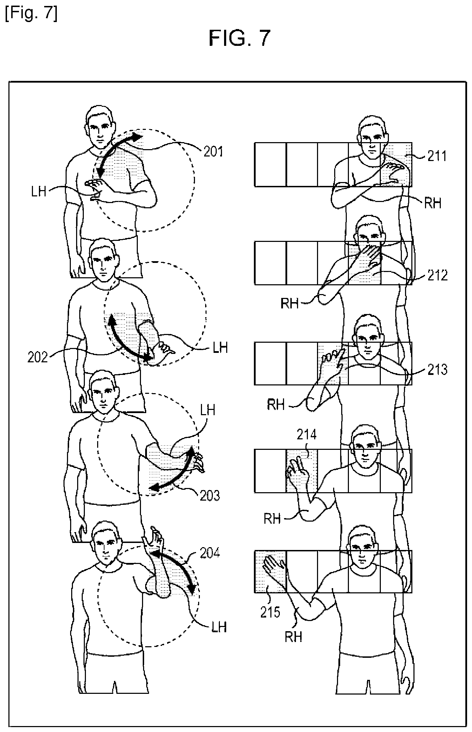

With the above processes, when pose information associated with a previously classified pose is supplied, and an associated pose command is supplied to the information selection control unit 32. Because of this, as a previously classified pose, for example, as indicated in sequence from above in the left part in Fig. 7, poses in which the palm of the left arm LH of a human body of a user (that is, a reference point disposed along a first portion of the human body) points in the left direction (e.g., pose 201), points in the downward direction (e.g., pose 202), points in the right direction (e.g., pose 203), and points in the upward direction (e.g., pose 204)into the page with respect to the left elbow can be identified and recognized. And, as indicated in the right part in Fig. 7, poses in which the palm of the right arm RH (that is, a second reference point disposed along a second portion of the human body) points to regions 211 to 215 imaginarily arranged in front of the person in sequence from the right of the page can be identified and recognized.

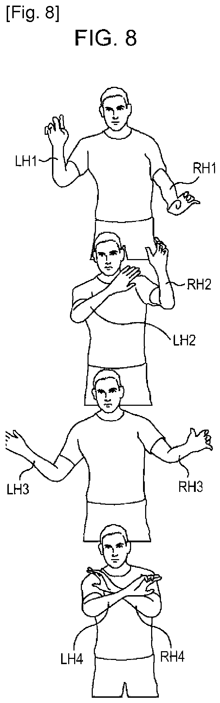

Additionally, recognizable poses may be ones other than the poses illustrated in Fig. 7. For example, as illustrated in Fig. 8, from above, a pose in which the left arm LH1 is at the upper left position in the page and the right arm RH1 is at the lower right position in the page, a pose in which the left arm LH2 and the right arm RH2 are at the upper right position in the page, a pose in which the left arm LH3 and the right arm RH3 are in the horizontal direction, and a pose in which the left arm LH1 and the right arm RH1 are crossed can also be identified and recognized.

That is, for example, identification using only the position of the palm (that is, the first spatial position and/or the second spatial position) may cause an error to occur in recognition because a positional relationship from the body is unclear. However, because recognition is performed as a pose of a human body, both arms can be accurately recognized, and the occurrence of false recognition can be suppressed. And, because of recognition as a pose, for example, even if both arms are crossed, the respective palms can be identified, the occurrence of false recognition can be reduced, and more complex poses can also be registered as poses that can be identified. Additionally, as long as only movement of the right side of the body or that of the left side of the body is registered, poses of the right and left arms can be recognized in combination, and therefore, the amount of pose information registered can be reduced, while at the same time many complex poses can be identified and recognized.

Here, the description returns to the flowchart of Fig. 3.

When in step S13 the pose recognition process is performed, the pose of a human body of a user is identified, and a pose command is output, the process proceeds to step S14. In step S14, the gesture recognition unit 56 performs a gesture recognition process, makes a comparison with gesture information registered in the gesture storage database 58 on the basis of pose information sequentially supplied from the human body pose estimation unit 52, and recognizes the gesture. Then, the gesture recognition unit 56 supplies a gesture command associated with the recognized gesture registered in the classified pose storage database 55 to the information selection control unit 32.

**Gesture Recognition Process**

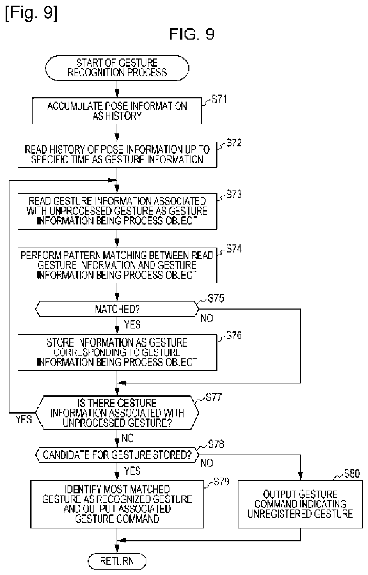

Here, the gesture recognition process is described with reference to the flowchart of Fig. 9.

In step S71, the gesture recognition unit 56 stores pose information supplied from the human body pose estimation unit 52 as a history for only a predetermined period of time in the pose history data buffer 57. At this time, the gesture recognition unit 56 overwrites pose information of the oldest frame with pose information of the newest frame, and chronologically stores the pose information for the predetermined period of time in association with the history of frames.

In step S72, the gesture recognition unit 56 reads pose information for a predetermined period of time chronologically stored in the pose history data buffer 57 as a history as gesture information.

In step S73, the gesture recognition unit 56 reads unprocessed gesture information (that is, the first spatial position and/or the second spatial position) as gesture information being a process object among gesture information registered in the gesture storage database 58 in association with previously registered gestures. Note that chronological pose information corresponding to previously registered gestures is registered as gesture information in the gesture storage database 58. In the gesture storage database 58, gesture commands are registered in association with respective gestures.

In step S74, the gesture recognition unit 56 compares gesture information being a process object and gesture information read from the pose history data buffer 57 by pattern matching. More specifically, for example, the gesture recognition unit 56 compares gesture information being a process object and gesture information read from the pose history data buffer 57 using continuous dynamic programming (DP). For example, continuous DP is an algorithm that permits extension and contraction of a time axis of chronological data being an input, and that performs pattern matching between previously registered chronological data, and its feature is that previous learning is not necessary.

In step S75, the gesture recognition unit 56 determines by pattern matching whether gesture information being a process object and gesture information read from the pose history data buffer 57 match with each other. In step S75, for example, when it is determined that the gesture information being the process object and the gesture information read from the pose history data buffer 57 match with each other, the process proceeds to step S76.

In step S76, the gesture recognition unit 56 stores a gesture corresponding to the gesture information being the process object as a candidate.

On the other hand, when it is determined that the gesture information being the process object and the gesture information read from the pose history data buffer 57 do not match with each other, the processing of step S76 is skipped.

In step S77, the gesture recognition unit 56 determines whether unprocessed information is registered in the gesture storage database 58. In step S77, for example, when unprocessed gesture information is registered, the process returns to step S73. That is, until unprocessed gesture information becomes nonexistent, the processing from step S73 to step S77 is repeated. Then, when it is determined in step 77 that there is no unprocessed gesture information, the process proceeds to step S78.

In step S78, the gesture recognition unit 56 determines whether a gesture as a candidate is stored. When it is determined in step S78 that a gesture being a candidate is stored, the process proceeds to step S79.

In step S79, the gesture recognition unit 56 recognizes the most matched gesture as being made by a human body of a user among gestures stored as candidates by pattern matching. Then, the gesture recognition unit 56 supplies a gesture command (that is, a first command and/or a second command) associated with the recognized gesture (that is, a corresponding first gesture or a second gesture) stored in the gesture storage database 58 to the information selection control unit 32.

On the other hand, in step S78, when no gesture being a candidate is stored, it is determined that no registered gesture is made. In step S80, the gesture recognition unit 56 supplies a gesture command indicating that unregistered gesture (that is, a generic command) is made to the information selection control unit 32.

That is, with the above process, for example, it is determined that gesture information including chronological pose information read from the pose history data buffer 57 is recognized as corresponding to a gesture in which the palm sequentially moves from state where the left arm LH points upward from the left elbow, as illustrated in the lowermost left row in Fig. 7, to a state as indicated by an arrow 201 in the lowermost left row in Fig. 7, where the palm points in the upper left direction in the page. In this case, a gesture in which the left arm moves counterclockwise in the second quadrant in a substantially circular form indicated by the dotted lines in Fig. 7 is recognized, and its corresponding gesture command is output.

Similarly, a gesture in which the palm sequentially moves from a state where the left arm LH points in the leftward direction in the page from the left elbow, as illustrated in the uppermost left row in Fig. 7, to a state where it points in the downward direction in the page, as indicated by an arrow 202 in the left second row in Fig. 7, is recognized. In this case, a gesture in which the left arm moves counterclockwise in the third quadrant in the page in a substantially circular form indicated by the dotted lines in Fig. 7 is recognized, and its corresponding gesture command is output.

And, a gesture in which the palm sequentially moves from a state where the left arm LH points in the downward direction in the page from the left elbow, as illustrated in the left second row in Fig. 7, to a state where it points in the rightward direction in the page, as indicated by an arrow 203 in the left third row in Fig. 7, is recognized. In this case, a gesture in which the left arm moves counterclockwise in the fourth quadrant in the page in a substantially circular form indicated by the dotted lines in Fig. 7 is recognized, and its corresponding gesture command is output.

Then, a gesture in which the palm sequentially moves from a state where the left arm LH points in the rightward direction in the page from the left elbow as illustrated in the left third row in Fig. 7 to a state where it points in the upward direction in the page as indicated by an arrow 204 in the lowermost left row in Fig. 7 is recognized. In this case, a gesture in which the left arm moves counterclockwise in the first quadrant in the page in a substantially circular form indicated by the dotted lines in Fig. 7 is recognized, and its corresponding gesture command is output.

Additionally, in the right part in Fig. 7, as illustrated in sequence from above, sequential movement of the right palm from the imaginarily set regions 211 to 215 is recognized. In this case, a gesture in which the right arm moves horizontally in the leftward direction in the page is recognized, and its corresponding gesture command is output.

Similarly, in the right part in Fig. 7, as illustrated in sequence from below, sequential movement of the right palm from the imaginarily set regions 215 to 211 is recognized. In this case, a gesture in which the right arm moves horizontally in the rightward direction in the page is recognized, and its corresponding gesture command is output.

In this way, because a gesture is recognized on the basis of pose information chronologically recognized, false recognition, such as a failure to determine whether the movement is made by the right arm or the left arm, would occur if a gesture is recognized simply on the basis of the path of movement of a palm can be suppressed. As a result, false recognition of a gesture can be suppressed, and gestures can be appropriately recognized.

Note that although a gesture of rotating the palm in a substantially circular form in units of 90 degrees is described as an example of gesture to be recognized, rotation other than this described example may be used. For example, a substantially oval form, substantially rhombic form, substantially square form, or substantially rectangular form may be used, and clockwise movement may be used. The unit of rotation is not limited to 90 degrees, and other angles may also be used.

Here, the description returns to the flowchart of Fig. 3.

When a gesture is recognized by the gesture recognition process in step S14 and a gesture command associated with the recognized gesture is supplied to the information selection control unit 32, the process proceeds to step S15.

In step S15, the information selection control unit 32 performs an information selection process, selects information being an option registered in the information option database 33 in association with a pose command or a gesture command. The information selection control unit 32 supplies the information it to the information device system control unit 34, which causes various processes to be performed, supplies the information to the information display control unit 35, and displays the selected information on the display unit 36.

Additionally, in step S16, the information selection control unit 32 determines whether completion of the process is indicated by a pose command or a gesture command. When it is determined that completion is not indicated, the process returns to step S11. That is, when completion of the process is not indicated, the processing of step S11 to step S16 is repeated. Then, when it is determined in step S16 that completion of the process is indicated, the process ends.

**Information Selection Process**

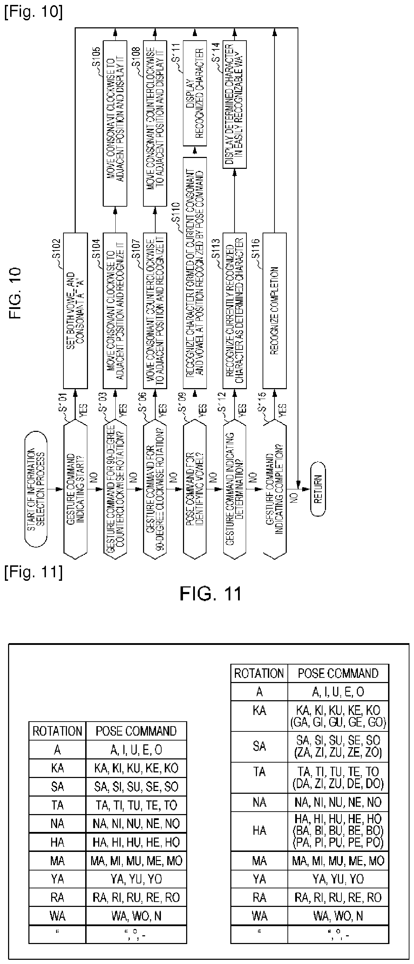

Here, the information selection process is described with reference to the flowchart of Fig. 10. Note that although a process of selecting one of kana characters (the Japanese syllabaries) as information is described here as an example, other information may be selected. At this time, an example in which a character is selected by selecting one of consonants (containing a voiced sound mark regarded as a consonant) moved by one character every time the palm is rotated by the left arm by 90 degrees, as illustrated in the left part in Fig. 7, and selecting a vowel by the right palm pointing to one of the regions 211 to 215 horizontally arranged is described. In this description, kana characters are expressed by romaji (a system of Romanized spelling used to transliterate Japanese). A consonant used in this description indicates the first character in a column in which a group of characters is arranged (that is, a group of objects), and a vowel used in this description indicates a character specified in the group of characters in the column of a selected consonant (that is, an object within the group of objects).

In step S101, the information selection control unit 32 determines whether a pose command supplied from the pose recognition unit 54 or a gesture command supplied from the gesture recognition unit 56 is a pose command or a gesture command indicating a start. For example, if a gesture of rotating the palm by the left arm by 360 degrees is a gesture indicating a start, when such a gesture of rotating the palm by the left arm by 360 degrees is recognized, it is determined that a gesture indicating a start is recognized, and the process proceeds to step S102.

In step S102, the information selection control unit 32 sets a currently selected consonant and vowel at "A" in the "A" column for initialization. On the other hand, when it is determined in step S101 that the gesture is not a gesture indicating a start, the process proceeds to step S103.

In step S103, the information selection control unit 32 determines whether a gesture recognized by a gesture command is a gesture of rotating the left arm counterclockwise by 90 degrees. When it is determined in step S103 that a gesture recognized by a gesture command is a gesture of rotating the left arm counterclockwise by 90 degrees, the process proceeds to step S104.

In step S104, the information selection control unit 32 reads information being an option registered in the information option database 33, recognizes a consonant moved clockwise to its adjacent one from a current consonant, and supplies the result of recognition to the information device system control unit 34, and the information display control unit 35.

That is, for example, as illustrated in the left part or right part in Fig. 11, as a consonant, "A," "KA," "SA," "TA," "NA," "HA," "MA," "YA," "RA," "WA," or "voiced sound mark" (resembling double quotes) is selected (that is, a group of objects is identified). In such a case, as indicated by a selection position 251 in a state P1 in the uppermost row in Fig. 12, when the "A" column is selected as the current consonant, if a gesture of rotating the palm by 90 degrees counterclockwise from the left arm LH11 to the left arm L12 as indicated by an arrow 261 in a state P2 in the second row in Fig. 12 is made, the "KA" column adjacent clockwise is selected as indicated by a selection position 262 in P2 in the second row in Fig. 12.

In step S105, the information display control unit 35 displays information indicating a recognized consonant being adjacent clockwise moved from the current consonant on the display unit 36. That is, for example, in the initial state, for example, as illustrated in a display field 252 in the uppermost state P1 in Fig. 12, the information display control unit 35 displays "A" in the "A" column being the default initial position to display information indicating the currently selected consonant on the display unit 36. Then, here, by rotation of the palm by the left arm LH11 counterclockwise by 90 degrees, the information display control unit 35 largely displays "KA" as illustrated in a display field 263 in the second row in Fig. 12 on the basis of information supplied from the information selection control unit 32 so as to indicate that the currently selected consonant is switched to "KA." Note that at this time in the display field 263, for example, "KA" is displayed as the center and only its adjacent "WA," "voiced sound mark", and "A" in the counterclockwise direction and its adjacent "SA," "TA," and "NA" in the clockwise direction are displayed. This enables possibility of selection of a consonant before or after the currently selected consonant to be easily recognizable.

Similarly, from this state, when, as indicated in a state P3 in the third row in Fig. 12, the left arm further moves from the left arm LH12 to the left arm LH13 by 90 degrees and the palm further moves counterclockwise, with the processing of steps S103 and S104, as indicated by a selection position 272, "SA," which is clockwise adjacent to the "KA" column, is selected. Then, with the processing of step S105, the information display control unit 35 largely displays "SA" so as to indicate that the currently selected consonant is switched to the "SA" column, as illustrated in a display field 273 in the state P3 in the third row in Fig. 12.

On the other hand, it is determined in step S103 that it is not a gesture of counterclockwise 90-degree rotation, the process proceeds to step S106.

In step S106, the information selection control unit 32 determines whether a gesture recognized by a gesture command is a gesture of rotating the left arm by 90 degrees clockwise. When it is determined in step S106 that a gesture recognized by a gesture command is a gesture of rotating the left arm by 90 degrees clockwise, for example, the process proceeds to step S107.

In step S107, the information selection control unit 32 reads information being an option registered in the information option database 33, recognizes a consonant moved to the counterclockwise adjacent position with respect to the current vowel, and supplies the result of recognition to the information device system control unit 34 and the information display control unit 35.

In step S108, the information display control unit 35 displays information indicating the recognized consonant moved to the counterclockwise adjacent position for the current consonant on the display unit 36.

That is, this is opposite to the process of rotation of the palm clockwise in the above-described steps S103 to S105. That is, for example, when the palm further moves clockwise by 180 degrees together with movement from the left arm LH13 to the left arm LH11 from the state P3 in the third row in Fig. 12, as illustrated in an arrow 281 in the state P4 in the fourth row, with the processing of steps S107 and S108, as indicated by a selection position 282, when the palm moves clockwise by 90 degrees, the adjacent "KA" is selected, and when the palm further moves clockwise by 90 degrees, "A" is selected. Then, with the processing of step S108, the information display control unit 35 largely displays "A" so as to indicate that the currently selected consonant is switched from "SA" to "A", as illustrated in a display field 283 in the state P4 in the fourth row in Fig. 12.

On the other hand, when it is determined in step S106 that it is not a gesture of clockwise 90-degree rotation, the process proceeds to step S109.

In step S109, the information selection control unit 32 determines whether a pose command supplied from the pose recognition unit 54 or a gesture command supplied from the gesture recognition unit 56 is a pose command or a gesture command for selecting a vowel (that is, an object of an identified group of objects). For example, when the palm selects one of the regions 211 to 215 imaginarily arranged in front of the person by the right arm, as illustrated in Fig. 7, in the case of a pose that identifies a vowel by that region, a pose command indicating a pose in which the palm points to one of the regions 211 to 215 by the right arm is recognized, it is determined that a gesture indicating that the vowel is identified (that is, the object is identified), and the process proceeds to step S110.

In step S110, the information selection control unit 32 reads information being an option registered in the information option database 33, recognizes a vowel corresponding to the position of the right palm recognized as the pose, and supplies the result of recognition to the information device system control unit 34 and the information display control unit 35.

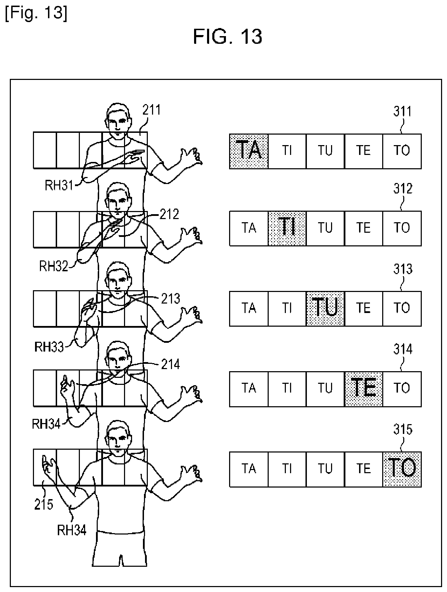

That is, for example, when the "TA" column is selected as a consonant, if a pose command indicating a pose in which the palm points to the region 211 imaginarily set in front of the person by the right arm RH31 is recognized, as illustrated in the uppermost row in Fig. 13, "TA" is selected as a vowel, as indicated by a selection position 311. Similarly, as illustrated in the second row in Fig. 13, if a pose command indicating a pose in which the palm points to the region 212 imaginarily set in front of the person by the right arm RH32 is recognized, as illustrated in the second row in Fig. 13, "TI" is selected as a vowel. As illustrated in the third to fifth rows in Fig. 13, if pose commands indicating poses in which the palm points to the regions 213 to 215 imaginarily set in front of the person by the right arms RH33 to RH35 are recognized, "TU," "TE," and "TO" are selected as their respective vowels.

In step S111, the information display control unit 35 displays a character corresponding to a vowel recognized to be selected on the display unit 36. That is, for example, a character corresponding to the vowel selected so as to correspond to each of display positions 311 to 315 in the left part in Fig. 13 is displayed.

On the other hand, it is determined in step S109 that it is not a gesture for identifying a consonant, the process proceeds to step S112.

In step S112, the information selection control unit 32 determines whether a pose command supplied from the pose recognition unit 54 or a gesture command supplied from the gesture recognition unit 56 is a pose command or gesture command for selecting determination. For example, if it is a gesture in which the palm continuously moves through the regions 211 to 215 imaginarily arranged in front of the person and selects one or a gesture in which the palm continuously moves through the regions 215 to 211, as illustrated in Fig. 7, it is determined that a gesture indicating determination is recognized, and the process proceeds to step S113.

In step S113, the information selection control unit 32 recognizes a character having the currently selected consonant and a determined vowel and supplies the recognition to the information device system control unit 34 and the information display control unit 35.

In step S114, the information display control unit 35 displays the selected character such that it is determined on the basis of information supplied from the information selection control unit 32 on the display unit 36.

And, when it is determined in step S112 that it is a gesture indicating determination, the process proceeds to step S115.

In step S115, the information selection control unit 32 determines whether a pose command supplied from the pose recognition unit 54 or a gesture command supplied from the gesture recognition unit 56 is a pose command or gesture command for indicating completion. When it is determined in step S115 that it is not a pose command or gesture command indicating completion, the information selection process is completed. On the other hand, in step S115, for example, when a pose command indicating a pose of moving both arms down is supplied, the information selection control unit 32 determines in step S116 that the pose command indicating completion is recognized and recognizes the completion of the process.

The series of the processes described above are summarized below.

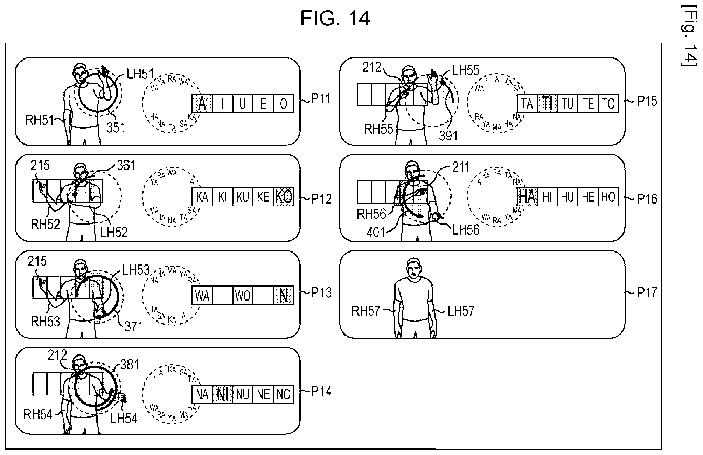

That is, when a gesture of moving the palm in a substantially circular form as indicated by an arrow 351 as illustrated in the left arm LH51 of a human body of a user in a state P11 in Fig. 14 is made, it is determined that starting is indicated and the process starts. At this time, as illustrated in the state P11 in Fig. 14, the "A" column is selected as a consonant as default, and the vowel "A" is also selected.

Then, a gesture of rotating the left arm LH51 in the state P11 counterclockwise by 90 degrees in the direction of an arrow 361 as indicated by the left arm LH52 in a state P12 is made, and a pose of pointing to the region 215 as indicated by the right arm RH52 by moving from the right arm RH51 is made. In this case, the consonant is moved from the "A" column to the "KA" column together with the gesture, and additionally, "KO" in the "KA" column is identified as a vowel by the pose. In this state, when a gesture indicating determination is made, "KO" is selected.

Next, a gesture of rotating the left arm LH52 in the state P12 by 270 degrees clockwise in the direction of an arrow 371 as indicated by the left arm LH53 in a state P13 is made, and a pose of pointing to the region 305 as indicated by the right arm RH53 without largely moving from the right arm RH52 is made. In this case, the consonant is moved to the "WA" column through the "A" and "voiced sound mark" columns for each 90-degree rotation together with the gesture, and additionally, "N" in the "WA" column is identified as a vowel by the pose. In this state, when a gesture indicating determination is made, "N" is selected.

And, a gesture of rotating the left arm LH53 in the state P13 by 450 degrees counterclockwise in the direction of an arrow 381 as indicated by the left arm LH54 in a state P14 is made, and a pose of pointing to the region 212 as indicated by the right arm RH54 by moving from the right arm RH53 is made. In this case, the consonant is moved to the "NA" column through the "voiced sound mark," "A," "KA," "SA," and "TA" columns for each 90-degree rotation together with the gesture, and additionally, "NI" in the "NA" column is identified as a vowel by the pose. In this state, when a gesture indicating determination is made, "NI" is selected.

Additionally, a gesture of rotating the left arm LH54 in the state P14 by 90 degrees clockwise in the direction of an arrow 391 as indicated by the left arm LH55 in a state P15 is made, and a pose of pointing to the region 212 as indicated by the right arm RH55 in the same way as for the right arm RH54 is made. In this case, the consonant is moved to the "TA" column together with the gesture, and additionally, "TI" in the "TA" column is identified as a vowel by the pose. In this state, when a gesture indicating determination is made, "TI" is selected.

And, a gesture of rotating the left arm LH55 in the state P15 by 180 degrees clockwise in the direction of an arrow 401 as indicated by the left arm LH56 in a state P16 is made, and a pose of pointing to the region 211 as indicated by the right arm RH56 by moving from the right arm RH55 is made. In this case, the consonant is moved to the "HA" column through the "NA" column together with the gesture, and additionally, "HA" in the "HA" column is identified as a vowel by the pose. In this state, when a gesture indicating determination is made, "HA" is selected.

Finally, as illustrated in a state P16, as indicated by the left arm LH57 and the right arm RH57, a series of gestures of moving both arms down and a pose that indicate completion cause "KONNITIHA" (meaning "hello" in English) to be determined and entered.

In this way, gestures and poses using right and left arms enable an entry of a character. At this time, a pose is recognized employing pose information, and a gesture is recognized employing chronological information of pose information. Therefore, false recognition, such as a failure to distinguish between right and left arms, that would occur if an option is selected and entered on the basis of the movement or the position of a single part of a human body can be reduced.

In the foregoing, a technique of entering a character on the basis of pose information obtained from eight joints of the upper half of a body and movement of the parts is described as an example. However, three kinds of states of a state where the fingers are clenched in the palm (rock), a state where only index and middle fingers are extended (scissors), and a state of an open hand (paper), may be added to a feature. This can increase the range of variations in the method of identifying a vowel using a pose command, such as enabling switching among selection of a regular character in the state of rock, selection of a voiced sound mark in the state of scissors, and selection of a semi-voiced sound mark in the state of paper, as illustrated in the right part in Fig. 11, even when substantially the same way as in the method of identifying a vowel is used.

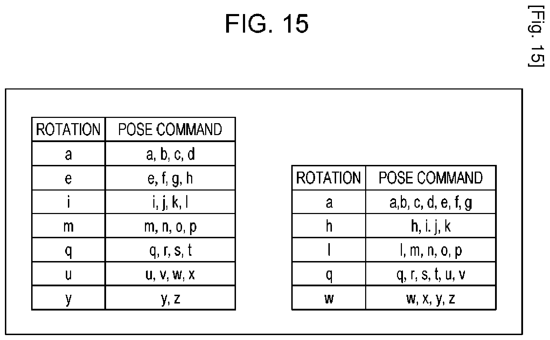

And, in addition to kana characters, as illustrated in the left part in Fig. 15, "a," "e," "i," "m," "q," "u," and "y" may also be selected by a gesture of rotation in a way similar to the above-described method of selecting a consonant. Then, "a, b, c, d" for "a," "e, f, g, h" for "e," "i, j, k, l" for "i," "m, n, o, p" for "m," "q, r, s, t" for "q," "u, v, w, x" for "u," and "y, z" for "y" may be selected in a way similar to the above-described selection of a vowel.

Additionally, if identification employing the state of a palm is enabled, as illustrated in the right part in Fig. 15, "a," "h," "l," "q," and "w" may also be selected by a gesture of rotation in a way similar to the above-described method of selecting a consonant. Then, "a, b, c, d, e, f, g" for "a," "h, i, j, k" for "h," "l, m, n, o, p" for "l," "q, r, s, t, u, v" for "q," and "w, x, y, z" for "w" may be selected in a way similar to the above-described selection of a vowel.

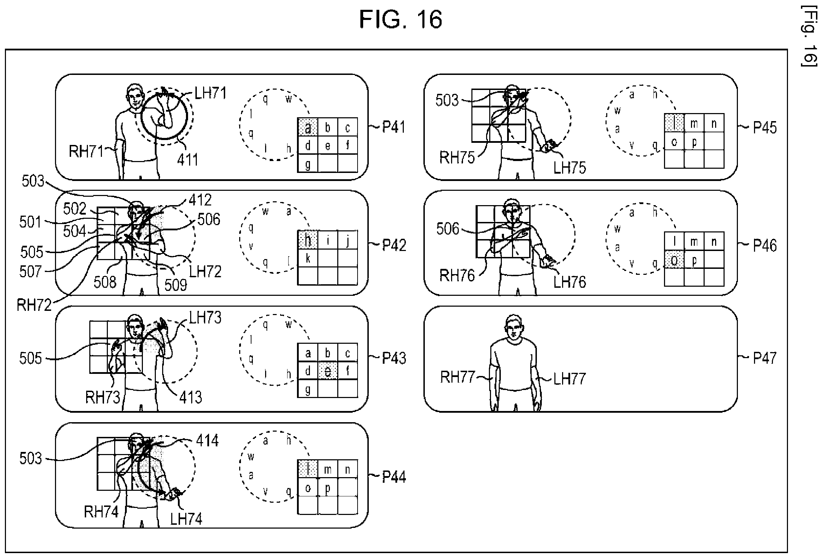

And, in the case illustrated in the right part in Fig. 15, even if identification employing the state of a palm is not used, the regions 211 to 215 imaginarily set in front of a person may be increased. In this case, for example, as illustrated in a state P42 in Fig. 16, a configuration that has nine (= 3*3) regions of regions 501 to 509 may be used.

That is, for example, as indicated by the left arm LH71 of a human body of a user in a state P41 in Fig. 16, when a gesture of moving the palm in a substantially circular form as indicated by an arrow 411 is made, it is determined that starting is indicated, and the process starts. At this time, as illustrated in the state P41 in Fig. 16, the "a" column is selected as a consonant by default, and "a" is also selected as a vowel.

Then, when a gesture of rotating the left arm LH71 in the state P41 counterclockwise by 90 degrees in the direction of an arrow 412 as indicated by the left arm LH72 in the state P42 is made and a pose of pointing to a region 503 as indicated by the right arm RH72 by moving from the right arm RH71 is made, the consonant is moved from the "a" column to the "h" column together with the gesture, and additionally, "h" in the "h" column is identified as a vowel by the pose. In this state, when a gesture indicating determination is made, "h" is selected.

Next, when a gesture of rotating the left arm LH72 in the state P42 by 90 degrees clockwise in the direction of an arrow 413 as indicated by the left arm LH73 in a state P43 is made and a pose of pointing to the region 505 as indicated by the right arm RH73 from the right arm RH72 is made, the consonant is moved to the "a" column for each 90-degree rotation together with the gesture, and additionally, "e" in the "a" column is identified as a vowel by the pose. In this state, when a gesture indicating determination is made, "e" is selected.

And, when a gesture of rotating the left arm LH73 in the state P43 by 180 degrees counterclockwise in the direction of an arrow 414 as indicated by the left arm LH74 in a state P44 is made and a pose of pointing to the region 503 as indicated by the right arm RH74 by moving from the right arm RH73 is made, the consonant is moved to the "l" column through the "h" column for each 90-degree rotation together with the gesture, and additionally, "l" in the "l" column is identified as a vowel by the pose. In this state, when a gesture indicating determination is made, "l" is selected.

Additionally, as indicated by the left arm LH75 and the right arm RH75 in a state P45, when a gesture indicating determination is made while the state P44 is maintained, "l" is selected again.

And, as indicated by the left arm LH76 in a state P46, when a pose of pointing to the region 506 as indicated by the right arm RH76 moved from the right arm RH75 is made while the left arm LH75 in the state P45 is maintained, "o" in the "l" column is identified as a vowel. In this state, when a gesture indicating determination is made, "o" is selected.

Finally, as illustrated by the left arm LH77 and the right arm RH77 in a state P47, a series of gestures of moving both arms down and a pose that indicate completion make an entry of "Hello."

Note that in the foregoing an example in which a consonant is moved by a single character for each 90-degree rotation angle is described. However, a rotation angle may not be used. For example, the number of characters of movement of a consonant may be changed in response to a rotation speed; for high speeds, the number of characters of movement may be increased, and for low speeds, the number of characters of movement may be reduced.

And, an example in which coordinates of the position and an angle of each joint of a human body in a three-dimensional space are used as pose information is described. However, information, such as opening and closing of a palm or opening and closing of an eye and a mouse, may be added so as to be distinguishable.

Additionally, in the foregoing, an example in which a kana character or a character of an alphabet is entered as an option is described. However, an option is not limited to only a character, and a file or folder may be selected using a file list or a folder list. In this case, a file or folder may be identified and selected by a creation date or a file size, like a vowel or consonant described above. One such example of the file may be a photograph file. In this case, the file may be classified and selected by information, such as the year, month, date, week, or time of obtaining an image, like a vowel or consonant described above.

From the above, in recognition of a pose or gesture of a human body, even if there is a partial hidden part caused by, for example, crossing right and left arms, the right and left arms can be distinguished and recognized, and information can be entered while the best possible use of a limited space can be made. Therefore, desired information can be selected from among a large number of information options without increasing the amount of movement of an arm, suppressing a decrease in willingness to enter information caused by effort of entry operation reduces fatigue of a user, and an information selection process with ease of operation can be achieved.

And, simultaneous recognition of different gestures made by right and left hands enables high-speed information selection and also enables selection by continuous operation, such as operation like drawing with a single stroke. Additionally, a large amount of information can be selected and entered using merely a small number of simple gestures, such as rotation or a change in the shape of a hand for determination operation, for example, sliding operation. Therefore, a user interface that enables a user to readily master operation and even a beginner to use it with ease can be achieved.

Incidentally, although the above-described series of processes can be executed by hardware, it can be executed by software. If the series of processes is executed by software, a program forming the software can be installed on a computer incorporated in dedicated hardware or a computer capable of performing various functions using various programs being installed thereon, for example, a general-purpose personal computer from a recording medium.

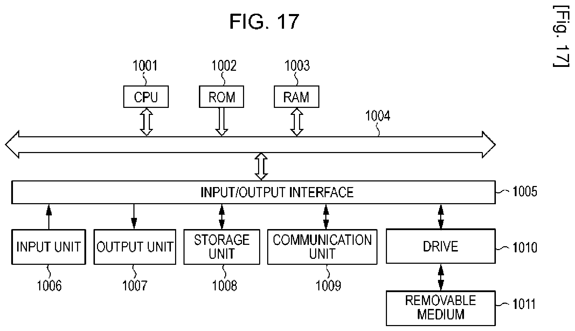

Fig. 17 illustrates a configuration example of a general-purpose personal computer. The personal computer incorporates a central processing unit (CPU) 1001. The CPU 1001 is connected to an input/output interface 1005 through a bus 1004. The bus 1004 is connected to a read-only memory (ROM) 1002 and a random-access memory (RAM) 1003.

The input/output interface 1005 is connected to an input unit 1006 including an input device from which a user inputs an operation command, such as a keyboard or a mouse, an output unit 1007 for outputting an image of a processing operation screen or a result of processing to a display device, a storage unit 1008 including a hard disk drive in which a program and various kinds of data are retained, and a communication unit 1009 including, for example, a local area network (LAN) adapter and performing communication processing through a network, typified by the Internet. It is also connected to a drive 1010 for writing data on and reading data from a removable medium 1011, such as a magnetic disc (including a flexible disc), an optical disc (including a compact-disk read-only memory (CD-ROM) and a digital versatile disc (DVD)), a magneto-optical disc (mini disc (MD), or semiconductor memory.

The CPU 1001 executes various kinds of processing in accordance with a program stored in the ROM 1002 or a program read from the removal medium 1011 (e.g., a magnetic disc, an optical disc, a magneto-optical disc, or semiconductor memory), installed in the storage unit 1008, and loaded into the RAM 1003. The RAM 1003 also stores data required for execution of various kinds of processing by the CPU 1001, as needed.

Note that in the present specification a step of describing a program recorded in a recording medium includes a process performed chronologically in the order being stated, of course, and also includes a process that is not necessarily performed chronologically and is performed in a parallel manner or on an individual basis.

Out of the functional component elements of the information processing apparatus 11 described above in reference to Fig. 1, noncontact capture unit 31, information selection control unit 32, information device system control unit 34, information display control unit 35, display unit 35, imaging unit 51, human body pose estimation unit 52, pose recognition unit 54, and gesture recognition unit 56 may be implemented as hardware using a circuit configuration that includes one or more integrated circuits, or may be implemented as software by having a program stored in the storage unit 1008 executed by a CPU (Central Processing Unit). The storage unit 1008 is realized by combining storage apparatuses, such as a ROM (e.g., ROM 1002) or RAM (1003), or removable storage media (e.g., removal medium 1011), such as optical discs, magnetic disks, or semiconductor memory, or may be implemented as any additional or alternate combination thereof.

Reference Signs List

11    information input apparatus;
31    noncontact capture unit;
32    information selection control unit;
33    information option database;
34    information device system control unit;
35    information display control unit;
36    display unit;
51    imaging unit;
52    human body pose estimation unit;
53    pose storage database;
54    pose recognition unit;
55    classified pose storage database;
56    gesture recognition unit;
57    pose history data buffer; and
58    gesture storage database

**Claims**

1.  An apparatus (11), comprising:

an imaging unit (51) configured to capture an image comprising at least first and second portions of a human body;
a receiving unit (52) configured to identify from the image, by estimating information on coordinates and an angle of a joint of the human body in a three-dimensional space, a first spatial position associated with a first reference point disposed along a first portion of the human body distal to a left or right shoulder, and a second spatial position associated with a second reference point disposed along a second portion of the human body distal to the other of the left or right shoulder;
an identification unit configured to identify a group of objects based on at least the first spatial position; and
a selection unit (32) configured to select an object of the identified group based on the second spatial position.

2. The apparatus of claim 1, further comprising:
a unit (54) configured to retrieve, from a database (55), pose information associated with the first and second portions of the human body, the pose information comprising a plurality of spatial positions corresponding to the first reference point and the second reference point.

3. The apparatus of claim 2, further comprising:
a determination unit configured to determine whether the first spatial position is associated with a first gesture, based on at least the retrieved pose information.

4. The apparatus of claim 3, wherein the determination unit is further configured to:

compare the first spatial position with the pose information associated with the first reference point; and
determine that the first spatial position is associated with the first gesture, when the first spatial position corresponds to at least one of the spatial positions of the pose information associated with the first reference point.

5. The apparatus of claim 3, wherein the identification unit is further configured to:

assign a first command to the first spatial position, when the first spatial position is associated with the first gesture,
and optionally:
wherein the identification unit is further configured to:
identify the group of objects in accordance with the first command.

6. The apparatus of claim 2, wherein the identification unit is further configured to:
determine a characteristic of a first gesture, based on a comparison between the first spatial position and at least one spatial position of the pose information that corresponds to the first reference point.

7. The apparatus of claim 6, wherein the characteristic comprises at least one of a speed, a displacement, or an angular displacement.

8. The apparatus of claim 3, wherein the identification unit is further configured to:
assign a generic command to the first spatial position, when the first spatial position fails to be associated with the first gesture.

9. The apparatus of claim 3, wherein the determination unit is further configured to:

determine whether the second spatial position is associated with a second gesture, based on at least the retrieved pose information,
and optionally:

wherein the determination unit is further configured to:
compare the second spatial position to the pose information associated with the second reference point; and
determine that the second spatial position is associated with the second gesture, when the second spatial position corresponds to at least one of the spatial positions of the pose information associated with the second reference point

and further optionally:

wherein the selection unit (32) is further configured to:
assign a second command to the second spatial position, when the second spatial position is associated with the second gesture,
and further optionally:
wherein the selection unit (32) is further configured to:
select the object of the identified group based on at least the second command.

10. The apparatus of claim 1, further comprising:
a unit (34) configured to perform a function corresponding to the selected object.

11. A computer-implemented method for gestural control of an interface, comprising:

capturing an image comprising at least first and second portions of a human body;
identifying from the image, by estimating information on coordinates and an angle of a joint of the human body in a three-dimensional space, a first spatial position associated with a first reference point disposed along a first portion of the human body distal to a left or right shoulder, and a second spatial position associated with a second reference point disposed along a second portion of the human body distal to the other of the left or right shoulder;

identifying a group of objects based on at least the first spatial position; and

selecting, using a processor, an object of the identified group based on at least the second spatial position.

12. A non-transitory, computer-readable storage medium storing a program that, when executed by a processor, causes a processor to perform a method for gestural control of an interface, comprising:

capturing an image comprising at least first and second portions of a human body;

identifying from the image, by estimating information on coordinates and an angle of a joint of the human body in a three-dimensional space, a first spatial position associated with a first reference point disposed along a first portion of the human body distal to a left or right shoulder, and a second spatial position associated with a second reference point disposed along a second portion of the human body distal to the other of the left or right shoulder;

identifying a group of objects based on at least the first spatial position; and

selecting an object of the identified group based on at least the second spatial position.

**Patentansprüche**

1. Vorrichtung (11), umfassend:

eine Bildgebungseinheit (51), konfiguriert zum Erfassen eines Bilds, umfassend mindestens erste und zweite Teile eines menschlichen Körpers;

eine Empfangseinheit (52), konfiguriert zum Identifizieren, aus dem Bild, durch Schätzen von Informationen über Koordinaten und eines Winkels eines Gelenks des menschlichen Körpers in einem dreidimensionalen Raum, einer ersten räumlichen Position, assoziiert mit einem ersten Referenzpunkt, angeordnet entlang einem ersten Teil des menschlichen Körpers distal zu einer linken oder rechten Schulter, und einer zweiten räumlichen Position, assoziiert mit einem zweiten Referenzpunkt, angeordnet entlang einem zweiten Teil des menschlichen Körpers distal zu der anderen der linken oder rechten Schulter;

eine Identifizierungseinheit, konfiguriert zum Identifizieren einer Gruppe von Objekten basierend auf mindestens der ersten räumlichen Position; und

eine Auswahleinheit (32), konfiguriert zum Auswählen eines Objekts der identifizierten Gruppe basierend auf der zweiten räumlichen Position.

2. Vorrichtung nach Anspruch 1, ferner umfassend: eine Einheit (54), konfiguriert zum Abrufen, aus einer Datenbank (55), von Haltungsinformationen, assoziiert mit den ersten und zweiten Teilen des menschlichen Körpers, die Haltungsinformationen umfassend eine Vielzahl von räumlichen Positionen korrespondierend mit dem ersten Referenzpunkt und dem zweiten Referenzpunkt.

3. Vorrichtung nach Anspruch 2, ferner umfassend: eine Bestimmungseinheit, konfiguriert zum Bestimmen, ob die erste räumliche Position mit einer ersten Geste assoziiert ist, basierend auf mindestens den abgerufenen Haltungsinformationen.

4. Vorrichtung nach Anspruch 3, wobei die Bestimmungseinheit ferner konfiguriert ist zum:

Vergleichen der ersten räumlichen Position mit den Haltungsinformationen, assoziiert mit dem ersten Referenzpunkt; und
Bestimmen, dass die erste räumliche Position mit der ersten Geste assoziiert ist, wenn die erste räumliche Position mit mindestens einer der räumlichen Positionen der Haltungsinformationen, assoziiert mit dem ersten Referenzpunkt, korrespondiert.

5. Vorrichtung nach Anspruch 3, wobei die Identifizierungseinheit ferner konfiguriert ist zum:

Zuweisen eines ersten Befehls der ersten räumlichen Position, wenn die erste räumliche Position mit der ersten Geste assoziiert ist,
und wahlweise:
wobei die Identifizierungseinheit ferner konfiguriert ist zum:
Identifizieren der Gruppe von Objekten in Übereinstimmung mit dem ersten Befehl.

6. Vorrichtung nach Anspruch 2, wobei die Identifizierungseinheit ferner konfiguriert ist zum:
Bestimmen eines Charakteristikums einer ersten Geste, basierend auf einem Vergleich zwischen der ersten räumlichen Position und mindestens einer räumlichen Position der Haltungsinformationen, die mit dem ersten Referenzpunkt korrespondieren.

7. Vorrichtung nach Anspruch 6, wobei das Charakteristikum mindestens eines einer Geschwindigkeit, einer Verlagerung oder einer Winkelverlagerung umfasst.

**8.** Vorrichtung nach Anspruch 3, wobei die Identifizierungseinheit ferner konfiguriert ist zum:
Zuweisen eines allgemeinen Befehls der ersten räumlichen Position, wenn die erste räumliche Position nicht mit der ersten Geste assoziiert ist.

**9.** Vorrichtung nach Anspruch 3, wobei die Bestimmungseinheit ferner konfiguriert ist zum:

Bestimmen, ob die zweite räumliche Position mit einer zweiten Geste assoziiert ist, basierend auf mindestens den abgerufenen Haltungsinformationen,
und wahlweise:
wobei die Bestimmungseinheit ferner konfiguriert ist zum:

Vergleichen der zweiten räumlichen Position mit den Haltungsinformationen, assoziiert mit dem zweiten Referenzpunkt; und
Bestimmen, dass die zweite räumliche Position mit der zweiten Geste assoziiert ist, wenn die zweite räumliche Position mit mindestens einer der räumlichen Positionen der Haltungsinformationen, assoziiert mit dem zweiten Referenzpunkt, korrespondiert,

und ferner wahlweise:
wobei die Auswahleinheit (32) ferner konfiguriert ist zum:

Zuweisen eines zweiten Befehls der zweiten räumlichen Position, wenn die zweite räumliche Position mit der zweiten Geste assoziiert ist,
und ferner wahlweise:
wobei die Auswahleinheit (32) ferner konfiguriert ist zum:
Auswählen des Objekts der identifizierten Gruppe basierend auf dem zweiten Befehl.

**10.** Vorrichtung nach Anspruch 1, ferner umfassend:
eine Einheit (34), konfiguriert zum Durchführen einer Funktion korrespondierend mit dem ausgewählten Objekt.

**11.** Computerimplementiertes Verfahren für Gestensteuerung einer Schnittstelle, umfassend:

Erfassen eines Bilds, umfassend mindestens erste und zweite Teile eines menschlichen Körpers;
Identifizieren, aus dem Bild, durch Schätzen von Informationen über Koordinaten und eines Winkels eines Gelenks des menschlichen Körpers in einem dreidimensionalen Raum, einer ersten räumlichen Position, assoziiert mit einem ersten Referenzpunkt, angeordnet entlang einem ersten Teil des menschlichen Körpers distal zu einer linken oder rechten Schulter, und einer zweiten räumlichen Position, assoziiert mit einem zweiten Referenzpunkt, angeordnet entlang einem zweiten Teil des menschlichen Körpers distal zu der anderen der linken oder rechten Schulter;
Identifizieren einer Gruppe von Objekten basierend auf mindestens der ersten räumlichen Position; und
Auswählen, unter Verwendung eines Prozessors, eines Objekts der identifizierten Gruppe basierend auf mindestens der zweiten räumlichen Position.

**12.** Nicht vergängliches computerlesbares Speichermedium, das ein Programm speichert, das, wenn es durch einen Prozessor ausgeführt wird, bewirkt, dass ein Prozessor ein Verfahren für Gestensteuerung einer Schnittstelle durchführt, umfassend:

Erfassen eines Bilds, umfassend mindestens erste und zweite Teile eines menschlichen Körpers;
Identifizieren, aus dem Bild, durch Schätzen von Informationen über Koordinaten und eines Winkels eines Gelenks des menschlichen Körpers in einem dreidimensionalen Raum, einer ersten räumlichen Position, assoziiert mit einem ersten Referenzpunkt, angeordnet entlang einem ersten Teil des menschlichen Körpers distal zu einer linken oder rechten Schulter, und einer zweiten räumlichen Position, assoziiert mit einem zweiten Referenzpunkt, angeordnet entlang einem zweiten Teil des menschlichen Körpers distal zu der anderen der linken oder rechten Schulter;
Identifizieren einer Gruppe von Objekten basierend auf mindestens der ersten räumlichen Position; und
Auswählen eines Objekts der identifizierten Gruppe basierend auf mindestens der zweiten räumlichen Position.

**Revendications**

**1.** Appareil (11), comprenant :

une unité d'imagerie (51) configurée pour capturer une image comprenant au moins des première et deuxième parties d'un corps humain ;
une unité de réception (52) configurée pour identifier, à partir de l'image, en estimant des informations sur des coordonnées et un angle d'une articulation du corps humain dans un espace tridimensionnel, une première position spatiale associée à un premier point de référence situé le long d'une première partie du corps humain distale d'une épaule gauche ou droite, et une deuxième position spatiale associée à un deuxième point de référence situé le long d'une deuxième partie du corps humain distale de l'autre épaule parmi l'épaule gauche ou droite ; une unité d'identification configurée pour identifier un groupe d'objets sur la base au moins de la première position spatiale ; et une unité de sélection (32) configurée pour sélectionner un objet du groupe identifié sur la base de la deuxième position spatiale.

2. Appareil selon la revendication 1, comprenant en outre :
une unité (54) configurée pour extraire, à partir d'une base de données (55), des informations de pose associées aux première et deuxième parties du corps humain, les informations de pose comprenant une pluralité de positions spatiales correspondant au premier point de référence et au deuxième point de référence.

3. Appareil selon la revendication 2, comprenant en outre :
une unité de détermination configurée pour déterminer si la première position spatiale est associée ou non à un premier geste, sur la base au moins des informations de pose extraites.

4. Appareil selon la revendication 3, dans lequel l'unité de détermination est configurée en outre pour :

comparer la première position spatiale aux informations de pose associées au premier point de référence ; et déterminer que la première position spatiale est associée au premier geste, lorsque la première position spatiale correspond à au moins une des positions spatiales des informations de pose associées au premier point de référence.

5. Appareil selon la revendication 3, dans lequel l'unité d'identification est configurée en outre pour :

assigner une première commande à la première position spatiale, la première position spatiale étant associée au premier geste, et, éventuellement :
dans lequel l'unité d'identification est configurée en outre pour :
identifier le groupe d'objets conformément à la première commande.

6. Appareil selon la revendication 2, dans lequel l'unité d'identification est configurée en outre pour :
déterminer une caractéristique d'un premier geste, sur la base d'une comparaison entre la première position spatiale et au moins une position spatiale des informations de pose correspondant au premier point de référence.

7. Appareil selon la revendication 6, dans lequel la caractéristique comprend une vitesse et/ou un déplacement et/ou un déplacement angulaire.

8. Appareil selon la revendication 3, dans lequel l'unité d'identification est configurée en outre pour : assigner une commande générique à la première position spatiale, lorsque la première position spatiale ne peut pas être associée au premier geste.

9. Appareil selon la revendication 3, dans lequel l'unité de détermination est configurée en outre pour : déterminer si la deuxième position spatiale est associée ou non à un deuxième geste, sur la base au moins des informations de pose extraites, et, éventuellement :
dans lequel l'unité de détermination est configurée en outre pour :

comparer la deuxième position spatiale aux informations de pose associées au deuxième point de référence ; et déterminer que la deuxième position spatiale est associée au deuxième geste, lorsque la deuxième position spatiale correspond à au moins une des positions spatiales des informations de pose associées au deuxième point de référence, et, éventuellement :
dans lequel l'unité de sélection (32) est configurée en outre pour :

assigner une deuxième commande à la deuxième position spatiale, la deuxième position spatiale étant associée au deuxième geste,
et, éventuellement encore :
dans lequel l'unité de sélection (32) est configurée en outre pour :
sélectionner l'objet du groupe identifié sur la base au moins de la deuxième commande.

10. Appareil selon la revendication 1, comprenant en outre :
une unité (34) configurée pour accomplir une fonction correspondant à l'objet sélectionné.

11. Procédé, mis en œuvre par ordinateur, de commande gestuelle d'une interface, comprenant :

la capture d'une image comprenant au moins des première et deuxième parties d'un corps humain ;

l'identification, à partir de l'image, par estimation d'informations sur des coordonnées et un angle d'une articulation du corps humain dans un espace tridimensionnel, d'une première position spatiale associée à un premier point de référence situé le long d'une première partie du corps humain distale d'une épaule gauche ou droite, et d'une deuxième position spatiale associée à un deuxième point de référence situé le long d'une deuxième partie du corps humain distale de l'autre épaule parmi l'épaule gauche ou droite ;

l'identification d'un groupe d'objets sur la base au moins de la première position spatiale ; et

la sélection, au moyen d'un processeur, d'un objet du groupe identifié sur la base au moins de la deuxième position spatiale.

12. Support d'enregistrement non transitoire lisible par ordinateur sur lequel est enregistré un programme qui, une fois exécuté par un processeur, amène un processeur à accomplir un procédé de commande gestuelle d'une interface, comprenant :

la capture d'une image comprenant au moins des première et deuxième parties d'un corps humain ;

l'identification, à partir de l'image, par estimation d'informations sur des coordonnées et un angle d'une articulation du corps humain dans un espace tridimensionnel, d'une première position spatiale associée à un premier point de référence situé le long d'une première partie du corps humain distale d'une épaule gauche ou droite, et d'une deuxième position spatiale associée à un deuxième point de référence situé le long d'une deuxième partie du corps humain distale de l'autre épaule parmi l'épaule gauche ou droite ;

l'identification d'un groupe d'objets sur la base au moins de la première position spatiale ; et

la sélection d'un objet du groupe identifié sur la base au moins de la deuxième position spatiale.

[Fig. 1]

FIG. 1

[Fig. 2]

FIG. 2

HUMAN BODY POSE ESTIMATION UNIT

~51
IMAGING UNIT

~52

~71
FACE DETECTION UNIT

~72
SILHOUETTE EXTRACTION UNIT

~73
NORMALIZATION PROCESS REGION EXTRACTION UNIT

~74
FEATURE EXTRACTION UNIT

~75
POSE ESTIMATION UNIT

~76
CORRECTION UNIT

~53
POSE STORAGE DATABASE

[Fig. 3]

# FIG. 3

```
        ( START OF INFORMATION INPUT PROCESS )
                          │
                          ▼
        ┌─────────────────────────────────┐   S11
        │          OBTAIN IMAGE           │
        └─────────────────────────────────┘
                          │
                          ▼
        ┌─────────────────────────────────┐   S12
        │  HUMAN BODY POSE ESTIMATION PROCESS │
        └─────────────────────────────────┘
                          │
                          ▼
        ┌─────────────────────────────────┐   S13
        │      POSE RECOGNITION PROCESS   │
        └─────────────────────────────────┘
                          │
                          ▼
        ┌─────────────────────────────────┐   S14
        │    GESTURE RECOGNITION PROCESS  │
        └─────────────────────────────────┘
                          │
                          ▼
        ┌─────────────────────────────────┐   S15
        │    INFORMATION SELECTION PROCESS │
        └─────────────────────────────────┘
                          │
                          ▼            S16
   NO   <  COMPLETION INDICATED?  >
                          │ YES
                          ▼
                     ( END )
```

[Fig. 4]

# FIG. 4

```
     ( START OF HUMAN BODY POSE ESTIMATION PROCESS )
                          │
                          ▼
        ┌─────────────────────────────────┐   S31
        │       EXTRACT REGION OF FACE    │
        └─────────────────────────────────┘
                          │
                          ▼
        ┌─────────────────────────────────┐   S32
        │        EXTRACT SILHOUETTE       │
        └─────────────────────────────────┘
                          │
                          ▼
        ┌─────────────────────────────────┐   S33
        │      EXTRACT NORMALIZATION      │
        │         PROCESS REGION          │
        └─────────────────────────────────┘
                          │
                          ▼
        ┌─────────────────────────────────┐   S34
        │         EXTRACT FEATURE         │
        └─────────────────────────────────┘
                          │
                          ▼
        ┌─────────────────────────────────┐   S35
        │          ESTIMATE POSE          │
        └─────────────────────────────────┘
                          │
                          ▼
        ┌─────────────────────────────────┐   S36
        │ CORRECT ESTIMATED POSE ON BASIS │
        │    OF CONSTRAINT OF HUMAN BODY  │
        └─────────────────────────────────┘
                          │
                          ▼
        ┌─────────────────────────────────┐   S37
        │      OUTPUT POSE INFORMATION    │
        └─────────────────────────────────┘
                          │
                          ▼
                    ( RETURN )
```

[Fig. 5]

# FIG. 5

```
        ┌──────────────────────┐
        │  START OF POSE       │
        │  RECOGNITION PROCESS │
        └──────────┬───────────┘
                   │
        ┌──────────▼───────────┐
        │ ACQUIRE POSE INFORMATION │──S51
        └──────────┬───────────┘
                   │
        ┌──────────▼────────────────┐
        │ READ UNPROCESSED POSE     │──S52
        │ INFORMATION AS POSE INFORMATION │
        │ BEING PROCESS OBJECT      │
        └──────────┬────────────────┘
                   │
        ┌──────────▼────────────────┐
        │ CALCULATE DIFFERENCE BETWEEN │──S53
        │ ACQUIRED POSE INFORMATION AND POSE │
        │ INFORMATION BEING PROCESS OBJECT │
        └──────────┬────────────────┘
                   │
        ╱──────────▼──────────╲  S54
       ╱ DIFFERENCE WITHIN TOLERANCE? ╲────────┐
        ╲────────┬────────────╱   NO           │
               YES                              │
        ┌────────▼────────────┐                │
        │ STORE INFORMATION AS CANDIDATE │──S55 │
        │ FOR RECOGNIZED POSE │                │
        └────────┬────────────┘                │
                 │◄──────────────────────────────┘
        ╱────────▼──────────╲  S56
 YES ──╱ IS THERE UNPROCESSED ╲
       ╲ POSE INFORMATION?    ╱
        ╲────────┬──────────╱
                NO
        ╱────────▼──────────╲  S57
       ╱ CANDIDATE FOR RECOGNIZED ╲
       ╲ POSE STORED?        ╱   NO
        ╲────────┬──────────╱              ┌─────S59
               YES                         │
        ┌────────▼────────────┐  S58    ┌──▼──────────────┐
        │ IDENTIFY POSE WITH SMALLEST │  │ OUTPUT POSE     │
        │ DIFFERENCE AS RECOGNIZED POSE │  │ INFORMATION INDICATING │
        │ AND OUTPUT ASSOCIATED │     │ UNCLASSIFIED POSE │
        │ POSE COMMAND        │        └──┬──────────────┘
        └────────┬────────────┘           │
                 │◄─────────────────────────┘
        ┌────────▼────────────┐
        │      RETURN         │
        └─────────────────────┘
```

[Fig. 6]

# FIG. 6

$V_1 = (a_1, a_2, a_3)$

$V_2 = (b_1, b_2, b_3)$

LH

θ

[Fig. 7]

# FIG. 7

[Fig. 8]

# FIG. 8

[Fig. 9]

FIG. 9

```
        ┌──────────────────────────────┐
        │    START OF GESTURE          │
        │    RECOGNITION PROCESS       │
        └──────────────────────────────┘
                      │
                      ▼
        ┌──────────────────────────────┐ ⌐S71
        │  ACCUMULATE POSE INFORMATION │
        │         AS HISTORY           │
        └──────────────────────────────┘
                      │
                      ▼
        ┌──────────────────────────────┐ ⌐S72
        │ READ HISTORY OF POSE INFORMATION UP TO │
        │ SPECIFIC TIME AS GESTURE INFORMATION   │
        └──────────────────────────────┘
                      │
                      ▼
        ┌──────────────────────────────┐ ⌐S73
        │ READ GESTURE INFORMATION ASSOCIATED │
        │ WITH UNPROCESSED GESTURE AS GESTURE │
        │ INFORMATION BEING PROCESS OBJECT    │
        └──────────────────────────────┘
                      │
                      ▼
        ┌──────────────────────────────┐ ⌐S74
        │ PERFORM PATTERN MATCHING BETWEEN READ │
        │ GESTURE INFORMATION AND GESTURE       │
        │ INFORMATION BEING PROCESS OBJECT      │
        └──────────────────────────────┘
                      │
                      ▼
              ╱─────────────╲  ⌐S75
             ╱   MATCHED?     ╲──── NO
             ╲               ╱
              ╲─────────────╱
                   │ YES
                   ▼
        ┌──────────────────────────────┐ ⌐S76
        │  STORE INFORMATION AS GESTURE │
        │  CORRESPONDING TO GESTURE     │
        │  INFORMATION BEING PROCESS OBJECT │
        └──────────────────────────────┘
                   │
                   ▼
              ╱─────────────╲ ⌐S77
      YES ───╱ IS THERE GESTURE ╲
             ╲ INFORMATION ASSOCIATED WITH
             ╲ UNPROCESSED GESTURE? ╱
              ╲─────────────╱
                   │ NO
                   ▼
              ╱─────────────╲ ⌐S78
             ╱ CANDIDATE FOR GESTURE STORED? ╲──── NO
              ╲─────────────╱
                   │ YES
                   ▼
        ┌──────────────────────┐ ⌐S79      ┌──────────────────┐ ⌐S80
        │ IDENTIFY MOST MATCHED │          │ OUTPUT GESTURE    │
        │ GESTURE AS RECOGNIZED GESTURE │  │ COMMAND INDICATING│
        │ AND OUTPUT ASSOCIATED │          │ UNREGISTERED GESTURE │
        │ GESTURE COMMAND       │          └──────────────────┘
        └──────────────────────┘
                   │
                   ▼
            ┌──────────┐
            │  RETURN  │
            └──────────┘
```

[Fig. 10]

FIG. 10

START OF INFORMATION SELECTION PROCESS

S101 GESTURE COMMAND INDICATING START? — YES → S102 SET BOTH VOWEL AND CONSONANT AT "A"
NO ↓

S103 GESTURE COMMAND FOR 90-DEGREE COUNTERCLOCKWISE ROTATION? — YES → S104 MOVE CONSONANT CLOCKWISE TO ADJACENT POSITION AND RECOGNIZE IT → S105 MOVE CONSONANT CLOCKWISE TO ADJACENT POSITION AND DISPLAY IT
NO ↓

S106 GESTURE COMMAND FOR 90-DEGREE CLOCKWISE ROTATION? — YES → S107 MOVE CONSONANT COUNTERCLOCKWISE TO ADJACENT POSITION AND RECOGNIZE IT → S108 MOVE CONSONANT COUNTERCLOCKWISE TO ADJACENT POSITION AND DISPLAY IT
NO ↓

S109 POSE COMMAND FOR IDENTIFYING VOWEL? — YES → S110 RECOGNIZE CHARACTER FORMED OF CURRENT CONSONANT AND VOWEL AT POSITION RECOGNIZED BY POSE COMMAND → S111 DISPLAY RECOGNIZED CHARACTER
NO ↓

S112 GESTURE COMMAND INDICATING DETERMINATION? — YES → S113 RECOGNIZE CURRENTLY RECOGNIZED CHARACTER AS DETERMINED CHARACTER → S114 DISPLAY DETERMINED CHARACTER IN EASILY RECOGNIZABLE WAY
NO ↓

S115 GESTURE COMMAND INDICATING COMPLETION? — YES → S116 RECOGNIZE COMPLETION
NO ↓

RETURN

[Fig. 11]

FIG. 11

| ROTATION | POSE COMMAND |
|---|---|
| A | A, I, U, E, O |
| KA | KA, KI, KU, KE, KO |
| SA | SA, SI, SU, SE, SO |
| TA | TA, TI, TU, TE, TO |
| NA | NA, NI, NU, NE, NO |
| HA | HA, HI, HU, HE, HO |
| MA | MA, MI, MU, ME, MO |
| YA | YA, YU, YO |
| RA | RA, RI, RU, RE, RO |
| WA | WA, WO, N |
| " | " 。, - |

| ROTATION | POSE COMMAND |
|---|---|
| A | A, I, U, E, O |
| KA | KA, KI, KU, KE, KO (GA, GI, GU, GE, GO) |
| SA | SA, SI, SU, SE, SO (ZA, ZI, ZU, ZE, ZO) |
| TA | TA, TI, TU, TE, TO (DA, ZI, ZU, DE, DO) |
| NA | NA, NI, NU, NE, NO |
| HA | HA, HI, HU, HE, HO (BA, BI, BU, BE, BO) (PA, PI, PU, PE, PO) |
| MA | MA, MI, MU, ME, MO |
| YA | YA, YU, YO |
| RA | RA, RI, RU, RE, RO |
| WA | WA, WO, N |
| " | " 。, - |

[Fig. 12]

# FIG. 12

[Fig. 13]

FIG. 13

[Fig. 14]

FIG. 14

EP 2 577 426 B1

[Fig. 15]

## FIG. 15

| ROTATION | POSE COMMAND |
|----------|--------------|
| a | a, b, c, d |
| e | e, f, g, h |
| i | i, j, k, l |
| m | m, n, o, p |
| q | q, r, s, t |
| u | u, v, w, x |
| y | y, z |

| ROTATION | POSE COMMAND |
|----------|--------------|
| a | a, b, c, d, e, f, g |
| h | h, i. j, k |
| l | l, m, n, o, p |
| q | q, r, s, t, u, v |
| w | w, x, y, z |

[Fig. 16]

# FIG. 16

EP 2 577 426 B1

EP 2 577 426 B1

FIG. 17

[Fig. 17]

1001      1002      1003

| CPU | | ROM | | RAM |

1004

INPUT/OUTPUT INTERFACE    1005

| INPUT UNIT | OUTPUT UNIT | STORAGE UNIT | COMMUNICATION UNIT | DRIVE | 1010

1006     1007     1008     1009

REMOVABLE MEDIUM    1011

# EP 2 577 426 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000029621 A
- WO 2010006087 A
- US 20080141181 A

### Non-patent literature cited in the description

- **HORO.** Realtime Pointing Gesture Recognition Using Volume Intersection. *The Japan Society of Mechanical Engineers, Robotics and Mechatronics Conference,* 2006
- **AKAHORI et al.** Interface of Home Appliances Terminal on User's Gesture. *ITX2001,* 2001
- **HORO ; OKADA ; INAMURA ; INABA.** Realtime Pointing Gesture Recognition Using Volume Intersection. *The Japan Society of Mechanical Engineers, Robotics and Mechatronics Conference,* 2006
- **NAKAMURA ; TAKAHASHI ; TANAKA.** Hands-Popie: A Japanese Input System Which Utilizes the Movement of Both Hands. *WISS,* 2006
- **SHINTANI.** Evaluation of a Pointing Interface for a Large Screen with Image Features. *Human Interface Symposium,* 2009